# EUROPÄISCHE PATENTSCHRIFT

(11) **EP 1 812 294 B1**
(45) Veröffentlichungstag und Bekanntmachung des Hinweises auf die Patenterteilung: **28.10.2009**
(21) Anmeldenummer: 05817432.7
(22) Anmeldetag: 16.11.2005
(51) Int. Cl.: B65B 3/30, G01F 15/00, G05D 9/12, G05D 7/06

(54) **VERFAHREN UND VORRICHTUNG ZUR STEUERUNG DES FÜLLVORGANGES BEIM ABFÜLLEN FLÜSSIGER BZW. PASTÖSER PRODUKTE IN EINZELNE BEHÄLTER**
METHOD AND DEVICE FOR CONTROLLING A FILLING PROCESS WHEN LIQUID OR PASTY PRODUCTS ARE FILLED INTO INDIVIDUAL CONTAINERS
PROCEDE ET DISPOSITIF POUR COMMANDER LE PROCESSUS DE REMPLISSAGE LORS DU REMPLISSAGE DE RECIPIENTS INDIVIDUELS AVEC DES PRODUITS LIQUIDES OU PATEUX

(30) Priorität: 18.11.2004 DE 102004055751
(43) Veröffentlichungstag der Anmeldung: 01.08.2007
(73) Patentinhaber: SIG Technology AG, 8212 Neuhausen am Rheinfall (CH)
(72) Erfinder: HORTMANNS, Johannes, 41844 Wegberg (DE); THEISSEN,Peter, 52525 Waldfeucht (DE)
(74) Vertreter: Cohausz & Florack
(86) Internationale Anmeldenummer: PCT/EP2005/012266
(87) Internationale Veröffentlichungsnummer: WO 2006/053726

(56) Entgegenhaltungen:
- DE-A1- 4 029 620
- US-A- 5 656 313
- US-A- 5 996 650
- US-A1- 2002 000 259
- US-B1- 6 186 193
- ASTROM K J ET AL: "PRACTICAL EXPERIENCES OF ADAPTIVE TECHNIQUES" PROCEEDINGS OF THE AMERICAN CONTROL CONFERENCE. SAN DIEGO, MAY 23 - 25, 1990, NEW YORK, IEEE, US, Bd. VOL. 2 CONF. 9, 23. Mai 1990 (1990-05-23), Seiten 1599-1606, XP000169999

## Beschreibung

Die Erfindung betrifft ein Verfahren zur Steuerung des Füllvorganges beim Abfüllen flüssiger bzw. pastöser Produkte in eine Vielzahl einzelner Behälter, wobei die Behälter taktweise wenigstens einem Füllauslass zugeführt werden, wobei das Befüllen in einem von der Taktzeit der zugeführten Behälter abhängigen Zeitintervall erfolgt.

Eine solchen Verfahren ist aus US 2002/0000253 bekannt. Maschinen zum Abfüllen flüssiger bzw. pastöser Produkte in eine Vielzahl einzeln zugeführter Behälter sind aus der Praxis in vielfacher Ausfertigung bekannt und weisen entweder einen oder mehrere Vorratstanks auf oder sind mit entsprechenden Füllleitungen zur Bereitstellung des abzufüllenden Produktes versehen. Dabei weist jedes Füllorgan einen, meist pneumatisch angetriebenen, Füllzylinder auf, dessen Füllvolumen auf das Volumen der zu befüllenden Behälter abgestimmt ist, wobei dies Befüllung mit einem oder mehreren Öffnungshüben erfolgen kann. Hierbei ist der Öffnungshub des Füllzylinders konstant bzw. manuell nur durch das Verstellen von mechanischen Anschlägen einstellbar.

Wenn nun mit diesem bekannten System ein anderes Packungsformat, also ein anderes Füllvolumen abgefüllt werden soll, muss meist das gesamte Stellorgan ausgetauscht werden. Die Produktdurchflussgeschwindigkeit wird durch den Öffnungsquerschnitt bestimmt, welcher wiederum von den geometrischen Verhältnissen von Ventilstange und Zylindergehäuse abhängt. Das Öffnungs- und Schließverhalten wird durch pneumatische Drosseln rein visuell eingestellt.

Die Füllvolumensteuerung erfolgt bei den bekannten Anlagen durch einen in der Füllleitung vorgesehenen Durchflussmesser, welcher in der Regel ein magnetisch induktiver Durchflussmesser ist. In Abhängigkeit vom zugeführten einzelnen Behälter wird das Füllventil durch einen von einer Steuereinheit kommenden Startimpuls für eine vorgegebene Zeit geöffnet.

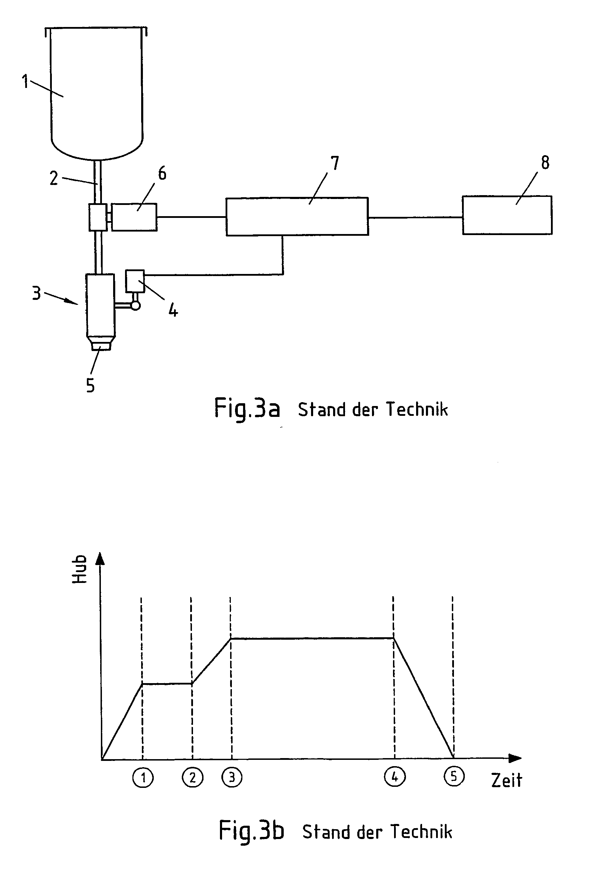

Eine solche Anlage nach dem Stand der Technik ist in Fig. 3 dargestellt, wobei Fig. 3a den schematischen Aufbau einer bekannten Vorrichtung und Fig. 3b ein Fülldiagramm (Hubweg/Zeit) zeigen.

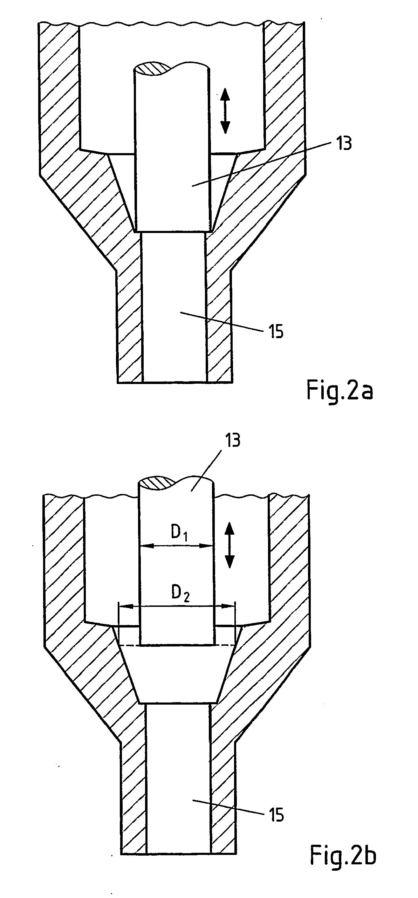

Ein das abzufüllende Produkt enthaltender Tank 1 ist über eine Füllleitung 2 mit einem Füllzylinder 3 verbunden, welchem ein Antrieb 4 zugeordnet ist und der einen Füllauslass 5 aufweist, durch den das abzufüllende Produkt in den darunter zugeführten (nicht dargestellten) Behälter gelangt. In der Leitung 2 zwischen Tank 1 und Füllventil 3 ist ein Durchflussmesser 6 angeordnet. Ist dem Füllventil 3 ein zu befüllender Behälter ordnungsgemäß zugeführt worden, öffnet sich das Füllventil durch Betätigung des Füllzylinders 3 und das Produkt fließt mit einer konstanten Durchflussgeschwindigkeit in den Behälter. Das bekannte Füllverhalten ist in dem Diagramm gemäß Fig. 2b für einen Doppelzylinder mit konstanten Anschlägen dargestellt. Nach Zuführung des Behälters erfolgt ein erster Öffnungshub, wobei der Zylinder in die erste Öffnungsstellung ① fährt, dort eine Zeit verharrt ② und anschließend in eine zweite Öffnungsstellung ③ bewegt wird, bis die vorgegebene Füllmenge erreicht ist ④. Danach fährt der Zylinder wieder in die den Füllauslass verschließende Ausgangsstellung ⑤.

Die Steuerung des Füllvorganges erfolgt dabei über eine Auswert- bzw. Volumenregelung 7, welche einen Startimpuls von einer Steuereinheit erhält. Nach dem Start wird die Öffnungsstellung des Füllventils angesteuert. Diese Stellung wird für eine vordefinierte Zeit oder Füllmenge beibehalten, um dann den weiteren Öffnungshub zu betätigen. Auf dieser Öffnungsstellung wird ebenfalls für eine vordefinierte Zeit bzw. Füllmenge verharrt. Nach Erreichen dieser voreingestellten Werte wird dann der Füllauslass wieder in die verschließende Ausgangsstellung zurückgefahren. Die bekannte Steuerung hat keinen direkten Einfluss auf die Durchflussgeschwindigkeit der einzelnen Öffnungshübe bzw. auf den Öffnungshub selbst.

Die bekannte Füllvorrichtung bzw. das damit verwendete Füllverfahren sind nachteilig, da das Öffnungs- und Schließverhalten nicht reproduzierbar und automatisch einstellbar sind. Während des eigentlichen Füllvorganges gibt es keinerlei Informationen über die Produktmenge oder das Produktverhalten. Dies bedeutet, dass während des Füllablaufes keine Aussage über die Füllqualität gemacht werden kann, so dass Störungen wie beispielsweise übermäßige Schaumbildung nicht erkannt und damit auch nicht vermieden werden können. Überfüllungen sind die Folge, welche zur Verschmutzung des als Aseptikzone ausgebildeten Füllbereiches und so zu Stillstandszeiten zu Wartungs- bzw. Reinigungszwecken führen kann.

Die US 5 148 841 betrifft eine Vorrichtung zum Abfüllen von einzelnen Behältern, die taktweise einem Füllauslass zugeführt werden. Jedem Füllauslass ist dabei eine Einrichtung zum Variieren des Durchflusses vorgeschaltet. Der zu befüllende Behälter steht während des Füllvorgangs auf einer Waage, die mit einer eine Zeitnahme aufweisenden Steuereinheit verbunden ist, so dass die Steuereinheit aus dem von der Waage übermittelten Signalen eine mittlere Füllgeschwindigkeit berechnen kann. Diese wird während des Füllablaufs für drei festgelegte Zeitintervalle bestimmt. Erweist es sich, dass das Füllergebnis unbefriedigend war, können die Grundeinstellungen der Vorrichtung nachträglich solange justiert werden, bis das Füllergebnis bei einem späteren Füllvorgang wieder in vorbestimmten Schwankungsbreiten liegt.

Aus der DE 102 09 435 Cl geht eine Vorrichtung zum gleichzeitigen Befüllen mehrerer Behälter hervor, wobei jeder Behälter während des Füllvorgangs auf einer Waage angeordnet ist. Das Befüllen an sich erfolgt über ein Füllventil, dass über eine Steuereinrichtung ansteuerbar ist. Die Steuereinrichtung ist ferner mit der Waage verbunden, so dass die Steuereinrichtung über ein vorbestimmtes Zeitintervall des Füllablaufs eine mittlere Füllgeschwindigkeit errechnen kann. Diese wird dann mit einem vorgegebenen Sollwert verglichen. Im Falle einer Abweichung wird der Stellgrad des Füllventils solange vergrößert oder verkleinert, bis die Füllvorgänge bei den gleichzeitig zu füllenden Behältern zum gleichen Zeitpunkt abgeschlossen sind und Druckschwankungen beim Abschalten von nur einzelnen Füllventilen nicht zu einer Fehlfüllung führen.

Der Erfindung liegt daher die Aufgabe zugrunde, das eingangs genannte und zuvor näher beschriebene Verfahren zur Steuerung des Füllvorganges so auszugestalten und weiterzubilden, dass die vorerwähnten Nachteile zuverlässig vermieden werden.

Hinsichtlich des Verfahrens wird die Aufgabe in einer ersten Alternative dadurch gelöst, dass mittels einem von einem in einer den Füllauslass zugeordneten Fülleitung befindlichen Durchflussmesser beeinflussten Steuersignal der Füllablauf während des gesamten Füllablaufs über eine Veränderung der Durchflussgeschwindigkeit über die Füllzeit geregelt wird. In einem alternativen Verfahren erfolgt die Lösung der Aufgabe dadurch, dass mittels einem von einem in einer den Füllauslass zugeordneten Füllleitung befindlichen Durchflussmesser beeinflussten Steuersignal der Füllablauf während des gesamten Füllablaufs über eine Veränderung der Füllmenge über die Füllzeit geregelt wird.

Mit Hilfe des erfindungsgemäßen Verfahrens werden bereits während des Abfüllvorganges die Produktmenge, das Produktverhalten und die Abfüllparameter erfasst und überwacht, so dass frühzeitig in den Füllvorgang eingegriffen werden kann. Störungseinflüsse werden rechtzeitig erkannt und die Produktzeiten durch Verringerung bzw. Vermeidung von Stillstandszeiten verlängert.

Während beim Stand der Technik bisher immer nur die Endmenge geregelt wurde, lässt sich nun während des gesamten Füllablaufes durch Veränderung des Hubes des Füllzylinders über die Beeinflussung von Durchflussgeschwindigkeit bzw. Füllmenge der Füllprozess optimieren. Der Ablauf jedes Füllvorganges vom Beginn bis zum Ende ist nun - abhängig vom abzufüllenden Produkt - gleich und reproduzierbar. Schwankende Produkteigenschaften können daher über den Produktionszeitraum ausgeregelt werden, so dass die Qualität des Füllablaufes stets gleichmäßig ist. Durch die Erfindung ist bei gleicher Füllzeit ein wesentlich produktschonender und schaumreduzierter Abfüllvorgang möglich, selbst bei stark abweichenden Produkteigenschaften, da jedes Produkt mit einem identischen Parametersatz abgefüllt werden kann.

Gemäß einer weiteren Lehre der Erfindung wird die Durchflussgeschwindigkeit bzw. die Füllmenge über die Füllzeit kontinuierlich verändert. Dabei kann bevorzugt für ein bestimmtes Produkt der Füllablauf über eine festgelegte Zeit/Durchflussgeschwindigkeitskurve bzw. Zeit/Füllmengenkurve geregelt werden.

Gemäß einer weiteren Ausgestaltung der Erfindung können die Mittel zur Querschnittsveränderung einen verstellbaren Auslasskegel im Füllauslass aufweisen. Zur Veränderung des Auslassquerschnitts kann dabei ein pneumatischer oder aber auch ein elektrischer Antrieb vorgesehen sein.

Gemäß einer weiteren bevorzugten Lehre der Erfindung ist der Antrieb als Servoantrieb ausgebildet, wobei sowohl ein linearer Antrieb als auch ein rotatorischer Antrieb denkbar ist, je nachdem, welche Lösung sich im Einzelfall, beispielsweise aus Platzgründen, anbietet.

Die Erfindung wird nachfolgend anhand einer lediglich ein bevorzugtes Ausführungsbeispiel darstellenden Zeichnung näher erläutert. In der Zeichnung zeigen:
- Fig. 1a: den schematischen Aufbau eines Ausführungsbeispieles einer Vorrichtung,
- Fig. 1b: ein Fülldiagramm (Durchflussgeschwindigkeit/Zeit),
- Fig. 2a: einen Füllventilauslass in geschlossener und
- Fig. 2b: einen Füllventilauslass in geöffneter Stellung.

Wie beim in Fig. 3a gezeigten Stand der Technik, ist ein Tank 11 über eine Füllleitung 12 mit einem Füllventil 13 verbunden, wobei die Ansteuerung des Füllventil 13 über einen bevorzugt als Servoantrieb 14 ausgeführten Antrieb angesteuert wird. Wie in den Fig. 2a und 2b dargestellt, gelangt das Produkt mittels bewegbarem Kolben 13 aus dem nicht näher bezeichneten Füllzylinder 13 und durch einen Füllauslass 15 in den bereitgestellten nicht dargestellten Behälter. Bedingt durch die konische Aufweitung des Füllauslasses 15 und axiales Verfahren des Kolbens 13 wird je nach Kolbenhub ein unterschiedlicher Ringraumquerschnitt freigegeben. So entspricht beispielsweise der Füllquerschnitt in der Fig. 2b dargestellten Stellung der Differenz zwischen dem Kreisquerschnitt zum Durchmesser D₂ abzüglich des Kreisquerschnittes des Kolbendurchmessers D₁.

Erfindungsgemäß erfolgt während der gesamten Füllzeit eine Regelung des Füllablaufes. Dazu werden aus einem Durchflussmesser 16 Daten hinsichtlich der Durchflussgeschwindigkeit bzw. des Füllvolumens an eine Steuereinheit 17 übergeben, welche zur Optimierung des Füllverhaltens über den Servoantrieb 14 den Füllzylinder durch Bewegung des Kolbens 13 mehr oder weniger stark öffnet, um entweder auf der Basis der Durchflussgeschwindigkeit oder aber der Füllmenge ein insbesondere hinsichtlich der Schaumbildung optimiertes Füllverhalten für jeden Füllzyklus zu erreichen.

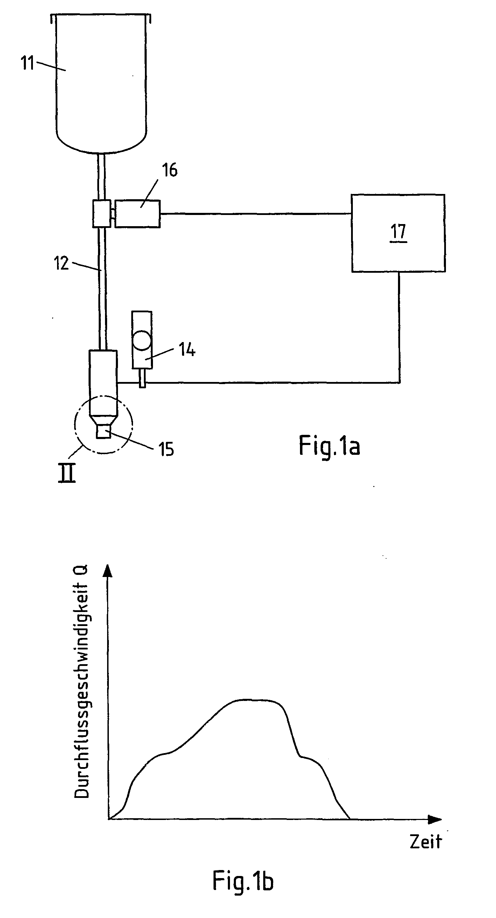

Ein Beispiel für eine Füllkurve ist in Fig. 1b dargestellt. Dort ist die Durchflussgeschwindigkeit über die Zeit für einen Füllvorgang dargestellt. Aus dem Diagramm wird schnell ersichtlich, dass hier ein individuell auf das jeweils abzufüllende Produkt abgestimmtes Füllverhalten ermöglicht wird.

## Patentansprüche

1. Verfahren zur Steuerung des Füllvorganges beim Abfüllen flüssiger bzw. pastöser Produkte in eine Vielzahl einzelner Behälter, wobei die Behälter taktweise wenigstens einem Füllauslass zugeführt werden und wobei das Befüllen in einem von der Taktzeit der zugeführten Behälter abhängigen Zeitintervall erfolgt,
**dadurch gekennzeichnet, dass** mittels einem von einem in einer den Füllauslass zugeordneten Füllleitung befindlichen Durchflussmesser beeinflussten Steuersignal der Füllablauf während des gesamten Füllablaufs über eine Veränderung der Durchflussgeschwindigkeit über die Füllzeit geregelt wird.

2. Verfahren zur Steuerung des Füllvorganges beim Abfüllen flüssiger bzw. pastöser Produkte in eine Vielzahl einzelner Behälter, wobei die Behälter taktweise wenigstens einem Füllauslass zugeführt werden und wobei das Befüllen in einem von der Taktzeit der zugeführten Behälter abhängigen Zeitintervall erfolgt,
**dadurch gekennzeichnet, dass** mittels einem von einem in einer den Füllauslass zugeordneten Füllleitung befindlichen Durchflussmesser beeinflussten Steuersignal der Füllablauf während des gesamten Füllablaufs über eine Veränderung der Füllmenge über die Füllzeit geregelt wird.

3. Verfahren nach Anspruch 1 oder 2,
**dadurch gekennzeichnet, dass** die Durchflussgeschwindigkeit bzw. die Füllmenge kontinuierlich verändert wird.

4. Verfahren nach Anspruch 3,
**dadurch gekennzeichnet, dass** der Füllablauf über eine festgelegte Zeit/Durchflussgeschwindigkeitskurve bzw. eine Zeit/Füllmengenkurve geregelt wird.

## Claims

1. Method for controlling the filling process in the filling of fluid or paste-like products into a plurality of individual containers, wherein the containers are conducted in a cyclic manner to at least one filling outlet, and wherein the filling takes place at a time interval which is dependent on the cyclic time of the containers being conducted,
**characterised in that**
the filling sequence is regulated by means of a control signal influenced by a flowmeter located in a filling line allocated to the filling outlet, during the entire filling sequence, by way of a change in the throughflow rate over the filling time.

2. Method for controlling the filling process in the filling of fluid or paste-like products into a plurality of individual containers, wherein the containers are conducted in a cyclic manner to at least one filling outlet, and wherein the filling takes place at a time interval which is dependent on the cyclic time of the containers being conducted,
**characterised in that**
the filling sequence is regulated by means of a control signal influenced by a flowmeter located in a filling line allocated to the filling outlet, during the entire filling sequence, by way of a change in the filling quantity over the filling time.

3. Method according to Claim 1 or 2,
**characterised in that**
the throughflow rate and the filling quantity respectively are continually being changed.

4. Method according to Claim 3,
**characterised in that**
the filling sequence is regulated by way of a fixed time/throughflow rate curve and a time/filling quantity curve respectively.

## Revendications

1. Procédé de réglage d'un processus de remplissage lors du remplissage de produits liquides et respectivement, pâteux dans une série de récipients individuels, où les récipients sont amenés de manière cyclique par au moins une sortie de remplissage et où le remplissage est réalisé à intervalles de temps dépendant de la durée du cycle du récipient amené,
**caractérisé en ce que** par un signal de réglage influencé par le débitmètre se trouvant dans une conduite de remplissage agencée dans la sortie de remplissage, le développement du remplissage est réglé pendant tout le cours du remplissage par une modification de la vitesse de passage pendant la durée de remplissage.

2. Procédé de réglage d'un processus de remplissage lors du remplissage de produits liquides et respectivement, pâteux dans une série de récipients individuels, où les récipients sont amenés de manière cyclique par au moins une sortie de remplissage et où le remplissage est réalisé à intervalles de temps dépendant de la durée du cycle du récipient amené,
**caractérisé en ce que** par un signal de réglage influencé par le débitmètre se trouvant dans une conduite de remplissage agencée dans la sortie de remplissage, le développement du remplissage est réglé pendant tout le cours du remplissage par une modification de la quantité de remplissage pendant la durée de remplissage.

3. Procédé selon la revendication 1 ou 2, **caractérisé en ce que** la vitesse de passage et respectivement, la quantité de remplissage sont modifiés de manière continue.

4. Procédé selon la revendication 3, **caractérisé en ce que** le développement du remplissage est réglé par une courbe définie temps/vitesse de passage et respectivement, temps/quantité de remplissage.
